# EUROPEAN PATENT APPLICATION

(11) **EP 1 283 242 A1**
(43) Date of publication of application: **12.02.2003**
(21) Application number: 01202957.5
(22) Date of filing: 03.08.2001
(51) Int. Cl.: C08L 23/10, B32B 27/32, C08L 53/00

(54) **Blends of heterophasic polypropylene block copolymers for making films**

(71) Applicant: Amcor Flexibles Transpac N.V., 1160 Bruxelles (BE)
(72) Inventor: Malfait, Tony, 8880 Ledegem (BE); Bögels, Erik, 3620 Lanaken (BE); Rosseau, Patrick, 1850 Grimbergen (BE); Veys, Luc, 9000 Gent (BE)
(74) Representative: Meyers, Ernest

(57) **Abstract**

The invention is related to a film or a sheet material comprising a monolayer, called core layer, comprising at least a blend of 10 to 40% of the total weight of a polypropylene random heterophasic block copolymer and 60 to 90% of an heterophasic polypropylene block copolymer wherein the elongation in the said film is higher than 550% in the machine direction and higher than 700% in the cross direction.

## Description

### Field of the invention

The present invention relates to thermoplastic films, sheets or laminates of heterophasic polypropylene polymers and coextruded materials formed therefrom.

### State of the art

It is known that extruded propylene homopolymer and copolymer films have excellent mechanical and chemical properties. Several manufacturing processes can be conveniently used for filming and calendering polypropylene. The calendering technique is used to produce sheets and foils of at least 100µm, while for the production of thinner films, the use of extrusion-blowing, extrusion-casting or extrusion-bioriented stretching is preferred.

The pure (i.e. non-blended or non-modified) polypropylene homo-and copolymers exhibit high stiffness but have nevertheless limited impact resistance at low temperatures. The prior art documents WO 98/37144, EP-A2-0444671 and EP-A1-0972802 describe methods to overcome this problem by using impact modifiers as polyethylene, EPDM, EPM, SBS, SEBS, EVA, EMA, EBA, metallocene polymers or even Silan-grafted and hydrolisable polypropylene copolymers. Disadvantages of those methods are the excessive loss of heat resistance in certain cases and even manufacturing problems, related to blending, in order to get optimal dispersions, as well as the formation. of fisheyes or tearing of the film during the processing.

The technical evolution on the polymer film user markets shows more and more a need for polypropylene films and laminates which, in addition to good stiffness and impact resistance, also have good tear resistance associates to a good heat, and puncture resistance.

In the food packaging industry for instance, the film must have high puncture resistance, high clarity and gloss, and reduced permeability to specific gases.

Furthermore, autoclavability and high tear resistance are of major importance. These properties are preferably associated in peelable or sealable multilayer films.

In the case of a multilayer A-B-C film, where, B is the core layer and A and C are the skin layers, the core layer B assures the main mechanical properties such as stiffness, toughness and elongation resistance. The skin layers A and C supply functional properties like heat sealing, easy opening, additional stiffness, pearl lustre, transparency, and corona treatment possibilities for lamination.

Another application for temperature resistant films is the so-called vacuum bagging. In this technology, vacuum and heat are applied to a laminated workpiece of a thermoplastic film as a vacuum bagging membrane.

Heterophasic polypropylene can provide an acceptable performance at a lower cost than known vacuum bagging material as block copolymers of polyester/polyether such as Hytrel (registered trademark of Dupont de Nemours) disclosed in US Patent 5,123,985. The high temperature resistant polyester/polyether copolymer or polyamide films, which resist about to 200°C or 250°C, are about 3 to 5 times more expensive than heterophasic polypropylene films and are overengineered for some applications.

### Aims of the invention

The present invention aims to overcome the disadvantages and drawbacks of the abovementioned prior art products.

More specifically, the present invention aims to provide a product comprising, in one hand, a heterophasic polypropylene film with sufficient stiffness, good puncture, tear and temperature resistance for applications in the field of vacuum bagging, and on the other hand, a optical transparent product comprising a heterophasic coextruded PP film with thin sealing or peeling layers for food packaging applications.

### Summary of the invention

The invention primarily arose out of concerns and problems described in the prior art documents. The present invention not only overcomes these problems but provides in addition, the advantage of obtaining a film or a sheet material comprising a monolayer, called core layer, which comprises at least a blend of 10 to 40% of the total weight of a polypropylene random heterophasic block copolymer and 60 to 90% of an heterophasic polypropylene block copolymer where the elongation in the said film or sheet material is higher than 550% in the machine direction and higher than 700% in the cross direction.

A preferred embodiment of the present invention is a film or a sheet material wherein the core layer can be at least a blend of 15% to 30% of the total weight of a polypropylene random heterophasic block copolymer and 70 to 85% of an heterophasic polypropylene block copolymer.

An additional feature of this invention is that the stress resistance of the core layer is higher than 45N/mm2 in the machine direction and higher than 35N/mm2 in the cross direction while the heat resistance of the said product reaches 150°C.

In a general embodiment of the invention, the core layer is made from the heterophasic polypropylene copolymers having a thickness of about 10-100µm and having a tensile modulus of more than 350N/mm2.

In a particular embodiment of the invention, the films made from the heterophasic polypropylene copolymers have a thickness of about 20-80µm and have a tensile modulus of more than 400N/mm2.

According to an application of the invention, the core layer of the film can be coextruded with so-called skin layers providing sealing or/and peeling properties, possibly additional stiffness, and preferably one layer therein is made from a heterophasic polypropylene copolymers.

### Short description of the drawings

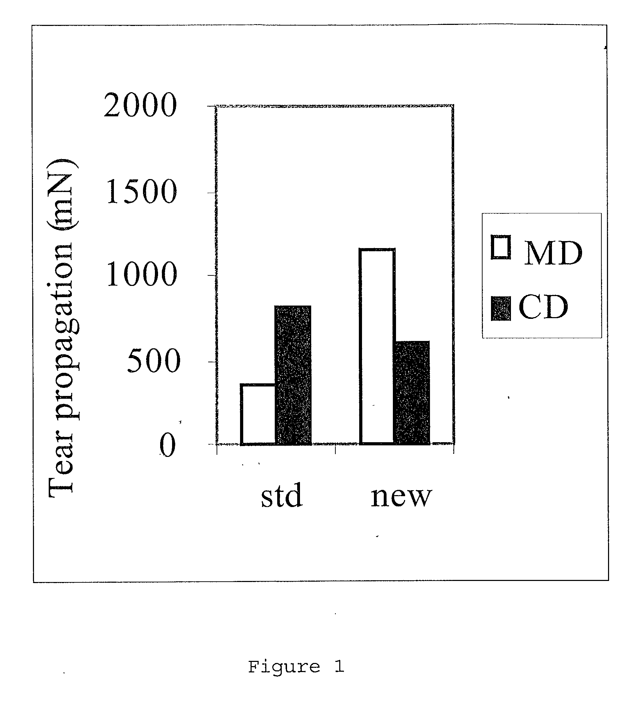

Fig. 1 represents the tear propagation resistance in the machine direction (MD) and in the cross direction (CD) of a 5/40/5µm peelable cast PP film in a prior art formulation (std) and improvements on a new formulation according to the invention(new).

Fig. 2 represents the tear propagation resistance, the stress resistance, the elongation resistance, and the E-modulus in the machine direction (MD) and in the cross direction (CD) of a 5/40/5µm sealable cast PP film in a prior art formulation (std) and improvements on a new formulation according to the invention (new).

Fig. 3 represents the tear resistance in the machine direction (mN) in relation to the stiffness in the machine direction of various samples according to the invention

### Detailed description of the invention

A Polypropylene film of various thickness is extruded on a extruder with L/D ratios between 28 and 32.

The matrix is builded by a reactor blended or extrusion blended heterophasic polypropylene block copolymer in which the amorphous parts behave as a dispersed phase in the crystalline matrix. Examples of those polymers are known in the market under the following commercial names: e.g. Borealis BD212CF, Borealis BD213 CF, which are registered trademarks from Borealis, Moplen EPC30R, registered trade name from Basell, Newcon NF 2106, registered trade name from Chisso.

The elastomeric properties of the matrix are improved by blending of 5 to 50%, and more preferably 10 to 40%, and most preferably 20 to 30% of a polypropylene random copolymer. Those polymers are known in the market under the following commercial names: e.g. Adflex C200F, Adflex Q100F which are registered trademarks from Montell or Softflex SD200CF, which is a registered trademark from Borealis. Unless indicated otherwise, the percentages are weight percentages in the description.

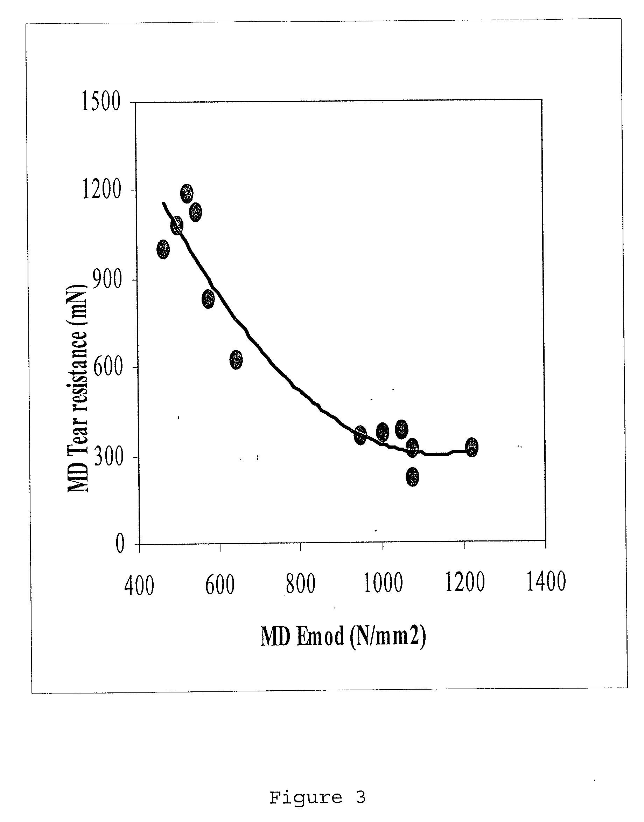

A careful selection of the concentration of the random copolymer and the thickness of the core and/or the surface layer keeps a good balance between the improved elastic properties and the stiffness. The inventor has established a relation between stiffness and elasticity of several films in the machine direction. (Fig 3)

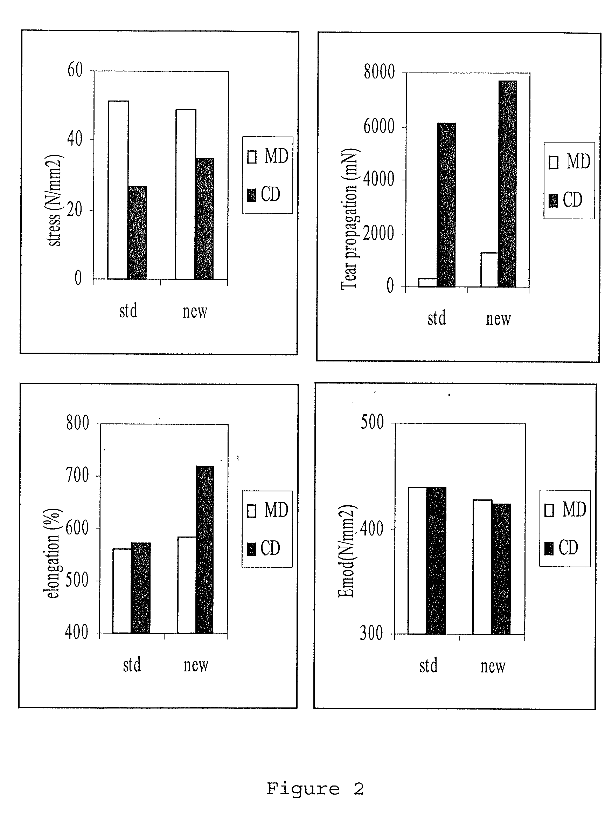

Figure 2 clearly illustrates the improvement of toughness (stress and elongation-700%) without a significant loss of stiffness. The most surprising characteristic of this invention is the increase of the tear propagation resistance, especially in the machine direction (MD), which is usually the weak point in a cast PP film.

Other measurements shows a significant resistance of the above mentioned films to energetic beams as gamma beam treatments for medical applications. This is particularly surprising because usual polypropylene films have no gamma-beam resistance.

Furthermore, clear identification methods, as Differential scanning calorimetry (DSC), Nuclear magnetic resonance of C13 (NMR) and IR spectroscopy are available to identify the polymers used in this invention.

### Description of a preferred embodiment of the invention

### Nomenclature

In the following nomenclature (Table 1), we describe the chemical nature of the polymers in relation to the trade names of the used polymers in the different examples.

The following PP cast film or blown film extrusion trials have been -performed to compromise stiffness and tear properties without consideration of any optical properties to cover vacuum bagging applications.

In the chart of Table 2, N° designates the trial number and T the thickness of the extruder layer.

In the formulations of Table 2, several materials can be used according to the following equivalencies:
Borealis BD212 CF: Moplen EP C 30R (Basell)
Borealis BB213 CF: Moplen EP Q 30RF (Basell)
Adflex C200F (Basell) : Softflex SD200CF (Borealis)
Moplen C30S (Basell) : Stamylan P 16 E 10FC (DSM)

Another serie of trials has been performed to cover food applications with acceptable optical properties and with good sealing properties (Table 3).

An additional serie of films with peeling properties has been performed for food applications (Table 4).

The products according to the invention can be used :
- as vacuum bagging film: the structure combines a temperature resistance up to 150°C with sufficient stiffness, puncture and tear resistance; in order to produce composite pieces for aircrafts. Vacuum bagging apparatus and method including a thermoplastic elastomer film vacuum bag are described in US 5,123,985.
- as release film, with elongation properties and good chemical resistance against cured resins, during the production of composite pieces for aircrafts. Perforation of the film can also be successfully performed.
- in heat sealed food packages (as bags or lidding film) for its superior tear resistance after opening.
- as heat sterilizable film in food application.

While the invention has been illustrated and described in what are considered to be the most practical and preferred embodiments, it will be recognised that many variations are possible and come within the spirit and the scope thereof, the appended claims therefore being entitled to a full range of equivalents.

**Table 1**

| **Trade name** | **Company** | **Chemical specification** | **Melt index (g/10')** | **Melting Range (°C)** |
|---|---|---|---|---|
| Borealis BB213CF | Borealis | Heterophasic PP (block) copolymer | 1.2 | 160-165 |
| Borealis BD212CF | Borealis | Heterophasic PP (block) copolymer | 5.0 | 160-165 |
| Moplen C30S | Basell | PP homopolymer | 6.0 | 160-165 |
| Adflex C200F | Basell | Random PP heterophasic block copo | 6.0 | 140-145 |
| Adflex Q100F | Basell | Random PP heterophasic block copo | 0.6 | 140-145 |
| RD735CF | Borealis | PP,C2 copolymer | 6.0 | 145-150 |
| Moplen EP2S29EB | Basell | | 2.0 | 145-150 |

The melt flow indexes are measured at 230°C, 2.16 Kg.

**Table 2**

| *N°* | *Film-Type* | *T* | *Polymer* |
|---|---|---|---|
| | monofilm | (µm) | |
| 1 | A | 50 | Borealis BD212CF or Moplen EPC30R |
| 2 | A | 50 | Borealis BD212CF/Adflex C200F (80/20) |
| 3 | A | 50 | Borealis BD212CF/Adflex C200F (60/40) |
| 4 | A | 50 | Borealis BD212CF/Adflex Q100F(80/20) |
| 5 | A | 50 | Borealis BD212CF/Adflex Q100F(60/40) |

| 6 | coexfilm | (µm) | |
|---|---|---|---|
| | A | 10 | Borealis BD212CF/Adflex C200F (80/20) |
| | B | 30 | Moplen C30S or Stamylan P 16 E 10FC |
| | C | 10 | Borealis BD212CF/Adflex C200F (80/20) |

| 7 | coexfilm | (µm) | |
|---|---|---|---|
| | A | 10 | Borealis BD212CF/Adflex C200F (60/40) |
| | B | 30 | Moplen C30S or Stamylan P 16 E 10FC |
| | C | 10 | Borealis BD212CF/Adflex C200F (60/40) |

**Table 3**

| **N°** | **Film-Type** | **T** | **Polymer** |
|---|---|---|---|
| 8 | coexfilm | (µm) | |
| | A | 18 | Borealis RD735CF or Basell EP2C30F |
| | B | 35 | Moplen C30S |
| | C | 17 | Borealis RD735CF or Basell EP2C30F |

| 9 | coexfilm | (µm) | |
|---|---|---|---|
| | A | 18 | Borealis RD735CF or Basell EP2C30F |
| | B | 35 | Borealis BD212CF |
| | C | 17 | Borealis RD735CF or Basell EP2C30F |

| 10 | coexfilm | (µm) | |
|---|---|---|---|
| | A | 8 | Borealis RD735CF or Basell EP2C30F |
| | B | 15 | Borealis BD212CF/Adflex C200F (80/20) |
| | C | 7 | Borealis RD735CF or Basell EP2C30F |

| 11 | coexfilm | (µm) | |
|---|---|---|---|
| | A | 8 | Borealis RD735CF or Basell EP2C30F |
| | B | 15 | Borealis BD212CF/Adflex C200F(60/40) |
| | C | 7 | Borealis RD735CF or Basell EP2C30F |

**Table 4**

| **N°** | **Film-Type** | **T** | **Polymer** |
|---|---|---|---|
| 12 | coexfilm | (µm) | |
| | A | 4 | Peelable formulation * |
| | B | 12 | Moplen C30S or Stamylan P 16 E 10FC |
| | C | 23 | Moplen C30S or Stamylan P 16 E 10FC |

| 13 | coexfilm | (µm) | |
|---|---|---|---|
| | A | 4 | Peelable formulation * |
| | B | 12 | Borealis BD212CF |
| | C | 23 | Borealis BD212CF |

| 14 | coexfilm | (µm) | |
|---|---|---|---|
| | A | 4 | Peelable formulation * |
| | B | 32 | Borealis BD212CF |
| | C | 4 | Borealis RD735CF or Basell EP2C30F |

| | | | |
|---|---|---|---|
| * Example of a peelable formulation : Daplen Unipeel 225, registered trademark from Borealis, MFI = 6.5 and melting range 120-140°C or alternatively Astryn EXP. 5333/5, registered trademark from Basell. | | | |

## Claims

1. A film or a sheet material comprising a monolayer, called core layer, which comprises at least a blend of 10 to 40 % of the total weight of a polypropylene random heterophasic block copolymer and 60 to 90% of an heterophasic polypropylene block copolymer where the elongation in the said film or sheet material is higher than 550% in the machine direction and higher than 700% in the cross direction.

2. A film or a sheet material according to claim 1, wherein the core layer is at least a blend of 15% to 30% of the total weight of a polypropylene random heterophasic block copolymer and at least 70 to 85% of an heterophasic polypropylene block copolymer.

3. A film or a sheet material as in claims 1 or 2, wherein the stress resistance of the said core layer is higher than 45N/mm2 in machine direction and higher than 35N/mm2 in cross direction.

4. A film or a sheet material as in any one of the preceding claims, wherein the core layer resists to temperatures up to 150°C.

5. A film or a sheet material according to any one of the preceding claims, wherein the core layer made from the heterophasic polypropylene copolymers has a thickness of about 10-100µm and have a tensile modulus of more than 350N/mm2.

6. A film or a sheet material according to any one of the preceding claims, wherein the core layer made from a heterophasic polypropylene copolymers has a thickness of about 20-80µm and have a tensile modulus of more than 400N/mm2.

7. A film or a sheet material according to any one of the preceding claims, wherein the core layer is coextruded with skin layers having sealing or/and peeling properties.

8. A film or a sheet material according to any one of the preceding claims, wherein at least one layer is made from a heterophasic polypropylene copolymers.
